# EUROPÄISCHE PATENTSCHRIFT

(11) **EP 0 900 923 B1**
(45) Veröffentlichungstag und Bekanntmachung des Hinweises auf die Patenterteilung: **11.12.2002**
(21) Anmeldenummer: 98113140.2
(22) Anmeldetag: 15.07.1998
(51) Int. Cl.: F01N 3/20, B01D 53/94, B01D 53/90

(54) **Gemischabgabevorrichtung**
Mixture delivery device
Dispositif de distribution d'un mélange

(30) Priorität: 05.09.1997 DE 19738859
(43) Veröffentlichungstag der Anmeldung: 10.03.1999
(73) Patentinhaber: ROBERT BOSCH GMBH, 70442 Stuttgart (DE)
(72) Erfinder: Brenner, Frank, Dipl.-Ing., 71686 Remseck (DE)

(56) Entgegenhaltungen:
- EP-A- 0 555 746
- WO-A-98/28070
- US-A- 5 209 062

## Beschreibung

### Stand der Technik

Die Erfindung geht aus von einer Gemischabgabevorrichtung nach der Gattung des Hauptanspruchs. Es besteht auch weiterhin die Forderung nach einer Verringerung schädlicher Abgasbestandteile von Brennkraftmaschinen. Zur Stickoxid-Reduktion in den Abgasen von Brennkraftmaschinen, insbesondere gemischverdichtenden selbstzündenden Brennkraftmaschinen, wird eine Harnstoff-Wasser-Lösung vor einen Katalysator in das Abgassystem der Brennkraftmaschine eingebracht. Im Katalysator wird der eingebrachte Harnstoff durch chemische Reaktionen in Ammoniak überführt, welcher die Reduktion von Stickoxiden bewirkt. Es ist schon eine ähnliche Gemischabgabevorrichtung bekannt (EP 0 586 913 A2), die jedoch nur zu einer Gemischeinblasung in einen Bereich des Abgassystems geeignet ist, in dem das Abgassystem abgewinkelt verläuft. Bekannt ist ebenfalls eine Gemischabgabevorrichtung (US-A-5 209 062), bei der in einem Abgasführenden Ringraum eine Ringleitung angeordnet ist, die ein Reduktionsmittel in Abgasströmungsrichtung in das Abgassprühende Düsen hat.

### Vorteile der Erfindung

Die Gemischabgabevorrichtung mit den kennzeichnenden Merkmalen des Hauptanspruchs hat demgegenüber den Vorteil, daß sie universeller einsetzbar ist und auch in Bereichen von Abgassystemen angeordnet werden kann, in denen das Abgassystem nicht abgewinkelt verläuft, und dabei eine optimale Position im axialen Abstand gegenüber einem Katalysator frei eingehalten werden kann. Außerdem ist eine homogene Einbringung des Gemisches in das Abgas gewährleistet.

Durch die in den Unteransprüchen aufgeführten Maßnahmen sind vorteilhafte Weiterbildungen und Verbesserungen der im Hauptanspruch angegebenen Gemischabgabevorrichtung möglich.

Vorteilhaft ist es, den Sprühkörper als geschlossenen Ring und den Verteilerkanal im Sprühkörper vollständig über 360° umlaufend auszubilden sowie die Sprühkanäle in Umfangsrichtung des Verteilerkanals in gleichem Abstand zueinander anzuordnen, so daß eine gleichmäßige Gemischeinbringung in das strömende Abgas erfolgt.

Ebenfalls vorteilhaft ist es, daß die Gemischführungsleitung an einer Ausströmöffnung in den Verteilerkanal mündet und die Querschnitte der der Ausströmöffnung am nächsten liegenden Sprühkanäle kleiner sind, als die Querschnitte der von der Ausströmöffnung weiter entfernten Sprühkanäle. Dadurch ergibt sich eine gleichmäßige Verteilung des Gemisches auf die Sprühkanäle.

Ebenfalls vorteilhaft ist es, daß die Sprühkanäle in Umfangsrichtung des Verteilerkanales mit Abstand zu einer Projektion der Ausströmöffnung der Gemischführungsleitung in den Verteilerkanal liegen, wodurch sich das Gemisch gleichmäßig in beide Richtungen des Verteilerkanals verteilt.

Weiterhin vorteilhaft ist es, unmittelbar stromaufwärts vor jedem Sprühkanal ein Leitelement anzuordnen, das aus der Innenwandung des Sprühkörpers in das Abgas ragt, wobei in einer Ausführungsform das Leitelement als umlaufender Ring mit einer sich in Abgasströmungsrichtung konisch nach innen geneigten Leitwand ausgebildet ist. Hierdurch wird erreicht, daß das Gemisch aus den Sprühkanälen in das Abgas eintritt und sich nicht an der Innenwandung des Sprühkörpers bzw. des Abgassystems ablagert.

### Zeichnung

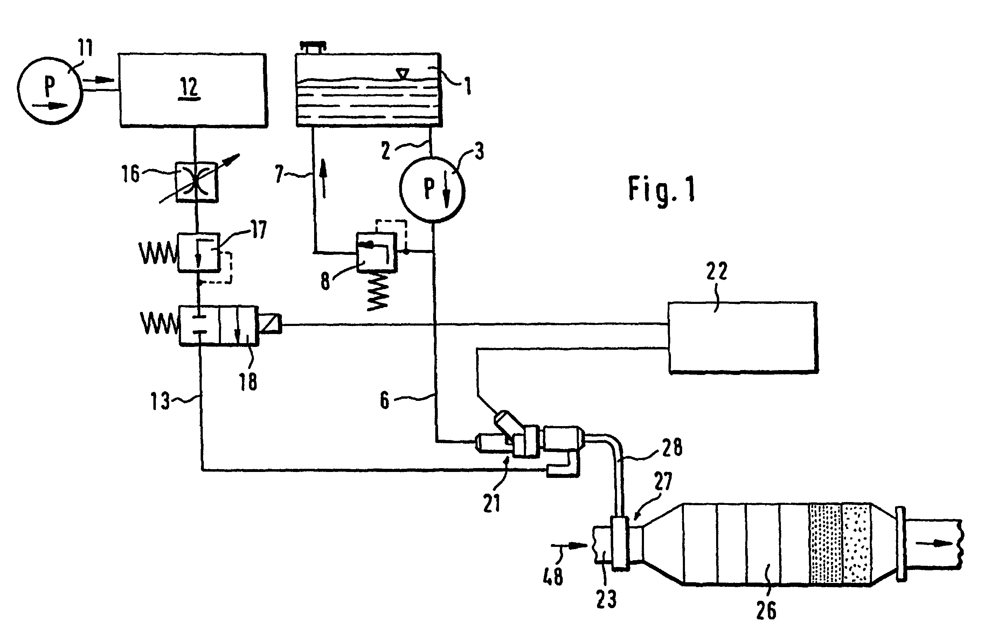

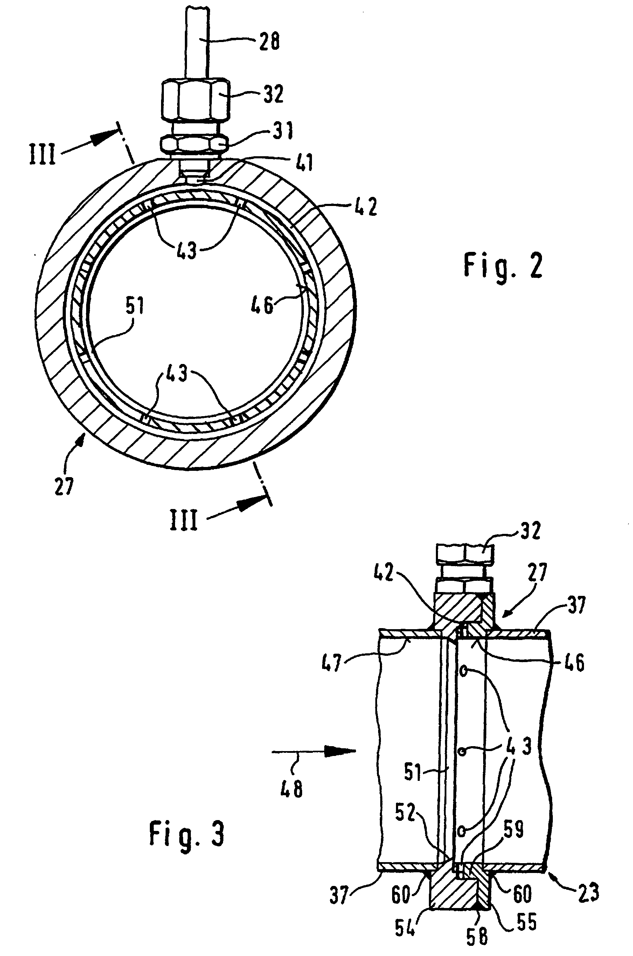

Ein Ausführungsbeispiel der Erfindung ist in der Zeichnung vereinfacht dargestellt und in der nachfolgenden Beschreibung näher erläutert. Es zeigen Figur 1 eine schematisch dargestellte Harnstoff-Dosiereinrichtung für ein Abgassystem einer Brennkraftmaschine mit einer erfindungsgemäß ausgebildeten Gemischabgabevorrichtung, Figur 2 einen erfindungsgemäß ausgebildeten Sprühkörper einer Gemischabgabevorrichtung zur Verwendung in einer Harnstoff-Dosiereinrichtung nach Figur 1, Figur 3 einen Schnitt entlang der Linie III-III in Figur 2.

### Beschreibung des Ausführungsbeispieles

Bei der Harnstoff-Dosiereinrichtung zur Abgabe einer Harnstoff-Wasser-Lösung vor einen Katalysator im Abgassystem einer Brennkraftmaschine, insbesondere einer gemischverdichtenden selbst zündenden Brennkraftmaschine, nach der Figur 1 ist ein Harnstoff-Wasser-Tank 1 vorgesehen, von dem aus eine Saugleitung 2 zur Saugseite einer druckerzeugenden Harnstofförderpumpe 3 führt. Die Harnstofförderpumpe 3 fördert eine Harnstoff-Wasser-Lösung in eine druckseitig angeschlossene Harnstoffdruckleitung 6. Von der Harnstoffdruckleitung 6 führt eine Entlastungsleitung 7 zurück zum Harnstoff-Wasser-Tank 1. In der Entlastungsleitung 7 ist ein Druckbegrenzungsventil 8 angeordnet, durch das der Druck in der Harnstoffdruckleitung 6 beispielsweise auf 3 bar begrenzt wird.

Die Harnstoff-Dosiereinrichtung weist weiterhin eine Gaspumpe 11 auf, die Druckgas mit beispielsweise 7 bar in einen Gasspeicher 12 fördert. Als Gas kann z. B. Luft, Abgas oder ein inertes Gas dienen. Mit dem Gasspeicher 12 ist ebenfalls eine Druckgasleitung 13 verbunden, in der in Reihe ein verstellbares Drosselventil 16, ein Druckregelventil 17 und ein elektromagnetisch betätigbares 2/2-Wegeventil 18 angeordnet sind. Das Druckregelventil 17 regelt den stromabwärtigen Druck in der Druckgasleitung 13 beispielsweise auf 1 bar. Das 2/2-Wegeventil 18 hat eine Sperrstellung, in der es in Figur 1 dargestellt ist, und eine Durchlaßstellung.

Die Harnstoffdruckleitung 6 und die Druckgasleitung 13 sind an ein Gemischzumeßventil 21 angeschlossen, das elektromagnetisch betätigbar ist und in dem eine Mischung der Harnstoff-Wasser-Lösung mit dem Druckgas erfolgt. Die Ansteuerung des 2/2-Wegeventils 18 und des Gemischzumeßventils 21 erfolgt durch ein elektronisches Steuergerät 22. Das mittels des Druckgases gleichmäßig und fein aufbereitete Gemisch mit der Harnstoff-Wasser-Lösung wird in ein Abgassystem 23 stromaufwärts eines Katalysators 26 bekannter Bauart mittels einer Gemischabgabevorrichtung in Form eines Sprühkörpers 27 eingeblasen. Der in den Katalysator 26 eingebrachte Harnstoff wird durch chemische Reaktionen in Ammoniak überführt, welcher die Reduktion der Stickoxide im Abgas bewirkt.

Die Figur 2 zeigt einen erfindungsgemäß ausgebildeten Sprühkörper 27. Dabei ist zwischen dem Gemischzumeßventil 21, für das ein bei der Benzineinspritzung bekanntes methanolfestes Einspritzventil verwendet werden kann, beispielsweise ein durch die DE 34 11 537 A1 bekanntes Einspritzventil, und dem Sprühkörper 27 eine Gemischführungsleitung 28 vorgesehen, die es ermöglicht, das Gemischzumeßventil 21 mit ausreichender Entfernung vom Abgassystem 23 anzuordnen, um das Gemischzumeßventil 21 thermisch von dem Abgassystem 23 zu entkoppeln. Der Sprühkörper 27 weist einen Eingangsstutzen 31 auf, der mit einem Außengewinde versehen ist, mit dem eine Überwurfmutter 32 verschraubt ist, die mit der Gemischführungsleitung 28 gekoppelt ist. Der Sprühkörper 27 ist konzentrisch mit der Wandung 37 (Figur 3) des Abgassystems 23 stromaufwärts des Katalysators 26 verbunden. Die Gemischführungsleitung 28 steht über eine Ausströmöffnung 41 mit einem Verteilerkanal 42 in Strömungsverbindung. Der Verteilerkanal 42 verläuft in dem Sprühkörper 27, der zumindest teilweise als Ring ausgebildet ist. Ist der Sprühkörper 27 vollständig als Ring ausgebildet, so verläuft der Verteilerkanal 42 innerhalb des Sprühkörpers als umlaufender Ringkanal, von dem in gleichmäßigen Abständen zueinander Sprühkanäle 43 ausgehen, die in radialer Richtung verlaufen und an einer Innenwandung 46 münden. Die Innenwandung 46 des Sprühkörpers 27 fluchtet mit einer Innenwandung 47 der Wandung 37 des Abgassystems 23, so daß das aus den Sprühkanälen 43 austretende Gemisch gleichmäßig verteilt in das in Abgasströmungsrichtung 48 strömende Abgas eintreten kann. Um eine gleichmäßige Verteilung des Gemisches im Verteilerkanal 42 auf die einzelnen Sprühkanäle 43 zu erzielen, ist es zweckmäßig, die Querschnitte der der Ausströmöffnung 41 der Gemischführungsleitung 28 am nächsten liegenden Sprühkanäle 43 kleiner zu machen, als die Querschnitte der von der Ausströmöffnung 41 weiter entfernten Sprühkanäle 43. Dabei ist es weiterhin zweckmäßig, keinen der Sprühkanäle 43 in eine Projektion der Ausströmöffnung 41, also fluchtend zur Ausströmöffnung 41, zu legen, sondern in Umfangsrichtung des Verteilerkanals 42 mit Abstand zur Projektion der Ausströmöffnung 41, damit das Gemisch im Verteilerkanal 42 in beide umlaufende Richtungen gleichmäßig auf die Sprühkanäle 43 verteilt wird. Um zu verhindern, daß sich unmittelbar an der kreisförmigen Innenwandung 46 des Sprühkörpers 27 Ablagerungen des Reduktionsmittels bilden, ist es zweckmäßig, unmittelbar stromaufwärts vor jedem Sprühkanal 43 ein Leitelement 51 anzuordnen, das, wie auch in Figur 3 dargestellt ist, aus der Innenwandung 46 des Sprühkörpers 27 heraus in das Innere des Sprühkörpers ragt, so daß das aus den Sprühkanälen 43 austretende Gemisch zunächst im Windschatten des Leitelementes 51 radial austreten kann, bis es dann in die Abgasströmung 48 gelangt. Als Leitelement 51 können einzelne, sich nur im Bereich unmittelbar stromaufwärts jedes Sprühkanals 43 segmentförmig in Umfangsrichtung erstreckende Erhebungen dienen, das Leitelement 51 kann jedoch auch als eine umlaufende Erhebung ausgebildet sein, wie es in den Figuren 2 und 3 dargestellt ist. Wie auch die einzelnen Leitelemente, so kann auch das in den Figuren 2 und 3 als umlaufender Ring dargestellte Leitelement 51 mit einer sich in Abgasströmungsrichtung 48 konisch nach innen geneigten Leitwand 52 ausgebildet sein.

Der Sprühkörper 27 kann beispielsweise aus einem ersten Teilring 54 und einem zweiten Teilring 55 zusammengesetzt sein, deren eine in radialer Richtung verlaufende Seitenwand jeweils so gestuft ausgebildet ist, daß der erste Teilring 54 und der zweite Teilring 55 an diesen gestuften Seitenflächen aneinander passend zur Bildung des Sprühkörpers 27 und beispielsweise mittels einer im Berührungsbereich am Umfang vollständig umlaufenden Schweißnaht 58 dicht zusammengefügt werden können. Dabei kann beispielsweise in einer Stufe 59 des zweiten Teilrings 55 der zum Umfang der Stufe 59 hin offene Verteilerkanal 42 ausgebildet sein, der im zusammengefügten Zustand vom ersten Teilring 54 abgedeckt wird und von dem ausgehend ebenfalls im zweiten Teilring 55 die Sprühkanäle 43 ausgebildet sind. Die Befestigung des Sprühkörpers 27 am Abgassystem 23 kann mittels Schweißnähten 60 erfolgen, die jeweils umlaufend die Wandung 37 des Abgassystems 23 mit dem Sprühkörper 27 verbinden. In nicht dargestellter Weise kann jedoch auch die Verbindung von dem ersten Teilring 54 mit dem zweiten Teilring 55 des Sprühkörpers 27 sowie die Verbindung des Sprühkörpers 27 mit der Wandung 37 des Abgassystems 23 durch eine Schraubverbindung erfolgen.

## Patentansprüche

1. Gemischabgabevorrichtung zur Einführung wenigstens eines Reduktionsmittels in ein Abgassystem einer Brennkraftmaschine, mit einer ein Gemisch aus Gas und wenigstens dem einen Reduktionsmittel zum Abgassystem führenden und an einem an dem Abgassystem angeordneten Sprühkörper endenden Gemischführungsleitung (26), wobei der Sprühkörper (27) zumindest teilweise als Ring ausgebildet ist, der eine kreisförmige Innenwandung (46) hat die eine vom Abgasdurchströmbene Öffnung bildet, an der quer zur Abgaströmungsrichtung (48) radial nach Innen verlaufende Sprühkanäle (43) münden und das das Abgassystem (23) durchströmende Abgas vorbeiströmt, wobei die Sprühkanäle (43) über einen im Sprühkörper (27) ausgebildeten Verteilerkanal (42) mit der Gemischführungsleitung (28) verbunden sind.

2. Gemischabgabevorrichtung nach Anspruch 1, **dadurch gekennzeichnet, daß** der Sprühkörper (27) als geschlossener Ring und der Verteilerkanal (42) im Sprühkörper (27) vollständig über 360° umlaufend ausgebildet ist.

3. Gemischabgabevorrichtung nach Anspruch 1 oder 2, **dadurch gekennzeichnet, daß** die Sprühkanäle (43) in Umfangsrichtung des Verteilerkanals (42) zueinander gleiche Abstände haben.

4. Gemischabgabevorrichtung nach Anspruch 1 oder 2, **dadurch gekennzeichnet, daß** die Gemischführungsleitung (28) mit einer Ausströmöffnung (41) in den Verteilerkanal (42) mündet und die Querschnitte der der Ausströmöffnung (41) am nächsten liegenden Sprühkanäle (43) kleiner sind, als die Querschnitte der von der Ausströmöffnung (41) weiter entfernten Sprühkanäle (43).

5. Gemischabgabevorrichtung nach Anspruch 1 oder 2, **dadurch gekennzeichnet, daß** die Sprühkanäle (43) in Umfangsrichtung des Verteilerkanals (42) mit Abstand zu einer Projektion der Ausströmöffnung (41) der Gemischführungsleitung (28) in dem Verteilerkanal (42) liegen.

6. Gemischabgabevorrichtung nach Anspruch 1 oder 2, **dadurch gekennzeichnet, daß** unmittelbar stromaufwärts vor jedem Sprühkanal (43) ein Leitelement (51) angeordnet ist, das aus der Innenwandung (46) des Sprühkörpers (27) ragt.

7. Gemischabgabevorrichtung nach Anspruch 6, **dadurch gekennzeichnet, daß** das Leitelement (51) als umlaufender Ring mit einer in Abgasströmungsrichtung (48) konisch nach innen geneigten Leitwand (52) ausgebildet ist.

## Claims

1. Mixture delivery device for introducing at least one reducing agent into an exhaust system of an internal combustion engine, having a mixture-guiding line (26), which guides a mixture of gas and at least the one reducing agent to the exhaust system and ends at a spray body arranged on the exhaust system, the spray body (27) being designed at least in part as a ring which has a circular inner wall (46) which forms an opening through which the exhaust gas can flow, at which spray passages (43), which run radially inwards, transversely with respect to the direction of flow (48) of the exhaust gas, open out and which the exhaust gas flowing through the exhaust system (23) flows past, the spray passages (43) being connected to the mixture-guiding line (28) via a manifold passage (42) formed in the spray body (27).

2. Mixture delivery device according to Claim 1, **characterized in that** the spray body (27) is designed as a closed ring, and the manifold passage (42) in the spray body (27) runs continuously all the way through 360°.

3. Mixture delivery device according to Claim 1 or 2, **characterized in that** the spray passages (43) are at equal distances from one another in the circumferential direction of the manifold passage (42).

4. Mixture delivery device according to Claim 1 or 2, **characterized in that** the mixture-guiding line (28) opens out, by means of an outflow opening (41) into the manifold passage (42), and the cross sections of the spray passages (43) which lie closest to the outflow opening (41) are smaller than the cross sections of the spray passages (43) which are further away from the outflow opening (41).

5. Mixture delivery device according to Claim 1 or 2, **characterized in that** the spray passages (43), as seen in the circumferential direction of the manifold passage (42), lie at a distance from a projection of the outflow opening (41) of the mixture-guiding line (28) in the manifold passage (42).

6. Mixture delivery device according to Claim 1 or 2, **characterized in that** a baffle element (51), which projects out of the inner wall (46) of the spray body (27), is arranged directly upstream of each spray passage (43).

7. Mixture delivery device according to Claim 6, **characterized in that** the baffle element (51) is designed as an encircling ring with a baffle wall (52) which is inclined conically inwards as seen in the direction of flow (48) of the exhaust gas.

## Revendications

1. Dispositif de distribution d'un mélange pour introduire au moins un agent réducteur dans un système de gaz d'échappement d'un moteur à combustion interne comprenant :
- une conduite de guidage (28) de mélange conduisant un mélange de gaz et d'au moins un agent réducteur vers le système de gaz d'échappement et se terminant au niveau d'un organe de pulvérisation installé dans le système de gaz d'échappement,
- l'organe de pulvérisation (27) étant au moins en partie réalisé comme anneau ayant une paroi intérieure annulaire (46) formant une ouverture traversée par les gaz d'échappement, ou débouchent les canaux de pulvérisation (43) dirigés radialement vers l'intérieur par rapport à la direction des gaz d'échappement (48), et où passent les gaz d'échappement,
- les canaux de pulvérisation (43) étant reliés à la conduite de mélange (28) par un canal de distribution (42) réalisé dans l'organe de pulvérisation (27).

2. Dispositif de distribution de mélange selon la revendication 1,
**caractérisé en ce que**
l'organe de pulvérisation (27) est un anneau fermé et le canal de distribution (42) s'étend dans l'organe de pulvérisation (27) totalement sur 360°.

3. Dispositif de distribution de mélange selon l'une quelconque des revendications 1 ou 2,
**caractérisé en ce que**
les canaux de pulvérisation (43) sont équidistants dans la direction périphérique du canal de distribution (42).

4. Dispositif de distribution de mélange selon l'une quelconque des revendications 1 ou 2,
**caractérisé en ce que**
la conduite de mélange (28) débouche avec un orifice de sortie (41) dans le canal de distribution (42) et la section des canaux de pulvérisation (43) les plus proches de l'orifice de sortie (41) est inférieure à la section des canaux de pulvérisation (43) plus éloignés de l'orifice de sortie (41).

5. Dispositif de distribution de mélange selon l'une quelconque des revendications 1 ou 2,
**caractérisé en ce que**
les canaux de pulvérisation (43) sont situés dans la direction périphérique du canal de distribution (42) à une distance de la projection de l'orifice de sortie (41) de la conduite de mélange (28) dans le canal de distribution (42).

6. Dispositif de distribution de mélange selon l'une quelconque des revendications 1 ou 2,
**caractérisé en ce qu'**
en amont directement devant chaque canal de pulvérisation (43) il est prévu un élément de guidage (51) venant en saillie de la paroi intérieure (46) de l'organe de pulvérisation (27).

7. Dispositif de distribution de mélange selon la revendication 6,
**caractérisé en ce que**
l'élément de guidage (51) est un anneau périphérique avec une paroi de guidage (52) inclinée de manière conique vers l'intérieur dans la direction d'écoulement des gaz d'échappement (48).
